# EUROPÄISCHE PATENTSCHRIFT

(11) **EP 1 982 147 B1**
(45) Veröffentlichungstag und Bekanntmachung des Hinweises auf die Patenterteilung: **16.12.2009**
(21) Anmeldenummer: 07722793.2
(22) Anmeldetag: 09.02.2007
(51) Int. Cl.: G01D 5/14

(54) **DREHWINKELSENSOR SOWIE VERFAHREN ZUM BESTIMMEN DER ABSOLUTEN WINKELSTELLUNG EINES ÜBER MEHRERE RUNDEN DREHBAREN KÖRPERS**
ROTATION ANGLE SENSOR AND METHOD FOR DETERMINING THE ABSOLUTE ANGULAR POSITION OF A BODY THAT UNDERGOES SEVERAL REVOLUTIONS
CAPTEUR D'ANGLE DE ROTATION ET PROCÉDÉ POUR DÉTERMINER LA POSITION ANGULAIRE ABSOLUE D'UN CORPS EFFECTUANT PLUSIEURS ROTATIONS

(30) Priorität: 11.02.2006 DE 102006006359
(43) Veröffentlichungstag der Anmeldung: 22.10.2008
(73) Patentinhaber: Leopold Kostal GmbH & Co. KG, 58507 Lüdenscheid (DE)
(72) Erfinder: MAIER, Oliver, 57439 Attendorn (DE); SCHIRP, Christian, 58454 Witten (DE)
(74) Vertreter: Kerkmann, Detlef
(86) Internationale Anmeldenummer: PCT/EP2007/001126
(87) Internationale Veröffentlichungsnummer: WO 2007/090669

(56) Entgegenhaltungen:
- EP-A1- 1 321 745
- DE-A1- 10 343 543

## Beschreibung

Die Erfindung betrifft einen Drehwinkelsensor zum Bestimmen der absoluten Winkelstellung eines über mehrere Runden drehbaren Körpers, etwa einer Lenkspindel eines Kraftfahrzeuges, mit zwei magnetisch arbeitend ausgelegten Messelementen, jeweils umfassend ein magnetisches, gegenüber einem Sensorelement rotatorisch bewegtes und von dem Körper angetriebenes Geberelement, wobei die beiden Geberelemente zum Bestimmen des sich aus der Differenz der Winkelinformation der Geberelemente ergebenden Schwebungswinkels mit einem unterschiedlichen Übersetzungsverhältnis angetrieben sind, welches so ausgelegt ist, dass innerhalb des sich über mehrere Runden erstreckenden Winkelmessbereiches des drehbaren Körpers mehr als eine Schwebungswinkelperiode enthalten ist, und die Absolufinrinkelstellung der Geberelemente in den Schwebungswinkelperioden unterschiedlich ist. Des Weiteren betrifft die Erfindung ein Verfahren zum Bestimmen der absoluten Winkelstellung eines solchen Drehwinkelsensors.

Drehwinkelsensoren werden eingesetzt, um Winkelinformationen hinsichtlich der aktuellen Drehwinkelstellung eines drehbar gelagerten Körpers, beispielsweise einer Welle, zu erhalten. Eingesetzt werden derartige Drehwinkelsensoren u.a. als Lenkwinkelsensoren zum Erfassen der Drehwinkelstellung der Lenkspindel eines Kraftfahrzeuges. Als Lenkwinkelsensoren sind beispielsweise optoelektronisch arbeitend konzipierte bekannt, bei denen eine in Wirkverbindung mit der Lenkspindel angeordnete Codescheibe die Winkelinformation trägt. Diese Codescheibe umgibt die Lenkspindel umfänglich in radialer Richtung und benötigt eine gewisse radiale Erstreckung, damit die notwendige Winkelinformation auf dieser untergebracht werden kann. Dieses gilt insbesondere für solche Lenkwinkelsensoren, mit denen die absolute Winkelstellung der Lenkspindel innerhalb ihres sich über mehrere Runden erstreckenden Winkelmessbereiches bestimmt werden soll. Neben diesen Lenkwinkelsensoren sind als absolut messende Drehwinkelsensoren auch magnetisch arbeitend ausgelegte bekannt geworden. Bei diesen vorbekannten Drehwinkelsensoren werden durch den drehbaren Körper, beispielsweise die Lenkspindel, zwei Coderäder angetrieben. Die Coderäder weisen jeweils einen äußeren Zahnkranz auf. Die Verzahnung der Coderäder greift ein in ein einen äußeren Zahnkranz aufweisendes Antriebsrad der Lenkspindel. Die Coderäder verfügen über jeweils ein magnetisches Geberelement, dessen Magnetfeldorientierung ein Maß für die Drehwinkelstellung des Coderades ist. Die beiden Coderäder sind mit einem unterschiedlichen Übersetzungsverhältnis von dem dem drehbaren Körper zugeordneten Antriebsrad angetrieben. Unter Anwendung des sogenannten Nonius-Prinzips wird die Winkellage des drehbaren Körpers innerhalb seines sich über mehrere Runden erstreckenden Winkelmessbereiches bestimmt. Die Coderäder weisen eine kleinere Zähnezahl auf, als das dem drehbaren Körper zugeordnete Antriebsrad. Die Untersetzung ist so konzipiert, dass sich die Coderäder innerhalb des sich über mehrere Runden des drehbaren Körpers erstreckenden Winkelmessbereich n-mal um 360° gedreht werden, wobei n größer ist als die Anzahl der Runden des Winkelmessbereiches. Während beispielsweise das eine Coderad über den vorgegebenen Winkelmessbereich des drehbaren Körpers neun Mal vollständig gedreht wird, wird das andere Coderad über denselben Messbereich hinweg zehn Mal um die eigene Achse vollständig gedreht. Als Empfängerelemente dienen magnetosensitive Sensoren, beispielsweise GMR-, AMR- oder Hall-Sensoren. Die Differenz der Winkelinformation der beiden Messelemente ergibt über den gesamten Messbereich hinweg einen Schwebungswinkel, der an dem einen Ende des Winkelmessbereiches den Wert 0 und am anderen Ende des Winkelmessbereiches des Drehwinkelsensors einen dem maximalen Ausgangssignal des einen Messelementes entsprechenden Wert aufweist. Der sich über den gesamten Winkelmessbereich erstreckende Schwebungswinkel weist eine konstante Steigung auf. Zum Bestimmen, in welcher Runde des Coderades sich der Drehwinkelsensor befindet, wird der Schwebungswinkel skaliert und von diesem die Winkelinformation des einen einem Coderad zugeordneten Messelementes abgezogen. Die Skalierung des Schwebungswinkels ist so ausgelegt, dass nach Abziehen der Winkelinformation von dem skalierten Schwebungswinkel einzelne horizontal verlaufende Kurvenabschnitte entstehen, die jeweils ein eigenes Niveau definieren. Jedes Niveau definiert eine Runde dieses Coderades, so dass auf diese Weise die zur Absolutwinkelbestimmung benötigte Rundeninformation gewonnen werden kann. Bekannt geworden ist ein solcher Drehwinkelsensor beispielsweise aus EP 0 877 916 A1.

Bei diesen Drehwinkelsensoren führen jedoch Störungen der Signale der Messelemente zu einer Reduzierung des effektiv nutzbaren Messbereiches.

Die mittels eines solchen Drehwinkelsensors gewonnene Winkelinformation des drehbaren Körpers, beispielsweise der Lenkspindel, wird bei Lenkwinkelsensoren durch die Radwinkelstellung im Rahmen einer Plausibilitätsprüfung kontrolliert. Die Radwinkelstellung wird wiederum durch die unterschiedliche Raddrehzahl der gelenkten Vorderräder des Kraftfahrzeuges ermittelt. Die Messungenauigkeit dieser Radwinkelbestimmung kann in der Größenordnung des Winkelfehlers liegen, der bei der irrtümlichen Wahl einer benachbarten Runde auftritt. Dieses führt im Rahmen der Plausibilitätsprüfung der durch den Lenkwinkelsensor gewonnenen Winkelinformation zur Fehlwinkelbestimmungen.

Durch die DE 103 43 543 B3 ist ein Drehwinkelsensor gemäß dem Oberbegriff des Patentanspruchs 1 bekannt geworden. Der Messbereich dieses Sensors beinhaltet eine Vielzahl von Schwebungswinkelperioden, wobei die zyklischen Perioden der beiden Geberelemente so gewählt sind, dass das kleinste gemeinsame Vielfache der zyklischen Perioden gleich einem vorbestimmten Lenkwinkel eines Automobils ist. Dies führt zu sehr unterschiedlichen Antriebsverhältnissen für die beiden Geberelemente und somit zu stark unterschiedlichen Drehgeschwindigkeiten.

Der Drehwinkelsensor gemäß der vorliegenden Erfindung hat gegenüber diesem vorbekannten Sensor den Vorteil, dass für die beiden Geberelemente sehr ähnliche Antriebsverhältnisse gewählt werden können, so dass vergleichsweise niedrige Drehgeschwindigkeiten beider Geberelemente erreichbar sind. Neben einem vereinfachten Aufbau resultiert hieraus auch eine geringe Geräuschentwicklung und die Verwendbarkeit eines sehr einfachen und wenig störanfälligen Auswerteverfahrens.

Dies wird erfindungsgemäß dadurch erreicht, dass die Absolutwinkelstellung der Geberelemente in aufeinander folgenden Schwebungswinkelperioden um den n-ten Teil des Messbereiches eines Sensorelementes versetzt ist, wobei n die Anzahl der Schwebungswinkelperioden innerhalb des Winkelmessbereiches ist.

Bei diesem Drehwinkelsensor ist der unterschiedlich übersetzte Antrieb der Geberelemente, die zweckmäßigerweise von Coderädern getragen sind, so ausgelegt, dass innerhalb des sich über mehrere Runden erstreckenden Winkelmessbereiches mehr als eine Schwebungswinkelperiode enthalten ist, also beispielsweise sich diese innerhalb des Winkelmessbereiches mehrfach periodisch wiederholt. Die Unterteilung des Winkelmessbereichs in mehrere Schwebungswinkelperioden hat zur Folge, dass die Steigung des Schwebungswinkels innerhalb jeder Periode entsprechend der Anzahl der innerhalb des Winkelmessbereiches vorgesehenen Schwebungswinkelperioden größer ist als bei einem einzigen, sich über den gesamten Winkelmessbereich erstreckenden Schwebungswinkel. Die größere Steigung hat unmittelbar zur Folge, dass der Abstand der für die Rundenbestimmung dienenden, über den skalierten Schwebungswinkel gebildeten Niveaus voneinander entsprechend größer ist. Bereits bei einer Unterteilung des Winketmessbereiches eines Lenkwinkelsensors in zwei aufeinander folgende Schwebungswinkelperioden führt dieses zu einer Verdoppelung der Steigung des Schwebungswinkels in jeder Periode. Die größere Steigung des Schwebungswinkels führt automatisch zu einer Verringerung des aufgrund von Störsignaleinflüssen nicht auswertbaren Randbereiches des Winkelmessbereiches, der mithin insgesamt größer ist.

Um trotz der zumindest teilweisen Wiederholung der Schwebungswinkelperiode innerhalb des Winkelmessbereiches eine Unterscheidbarkeit der Runden des Geberelementes zu erreichen, ist vorgesehen, dass sich die Absolutwinkel der Geberelemente in den Schwebungswinkelperioden voneinander unterscheiden. Im Ergebnis führt dieses dazu, dass der Abstand der einer Rundenbestimmung dienenden, unmittelbar benachbarter Niveaus voneinander größer ist als die mögliche Fehlertoleranz der im Rahmen einer Plausibilitätsprüfung zum Kontrollieren der Absolutwinkelmessung des Drehwinkelsensors heran gezogene Radwinkelstellung. Daher sind Winkelfehlbestimmungen, begründet durch eine fehlerbehaftete Plausibilitätsprüfung vermieden. Der Versatz beträgt bei einem Winkelmessbereich mit zwei Schwebungswinkelperioden beispielsweise 180°, unterstellend, dass der Messbereich eines Sensorelementes 360° beträgt. Diese Winkelverschiebung stellt eine zusätzliche Information dar, aus der die Schwebungswinkelperiode eindeutig ermittelt werden kann.

Zum Erzielen der Ausbildung der Schwebungswinkelperioden innerhalb des vorgesehenen Winkelmessbereiches können die die Geberelemente tragenden Coderäder, ausgebildet als Zahnräder, jeweils eine unterschiedliche Zahnanzahl aufweisen und über die unterschiedliche Zahnanzahl von einem dem drehbaren Körper, beispielsweise der Lenkspindel zugeordneten Antriebsrad, angetrieben sein. Dabei ist es möglich, dass beide Coderäder unmittelbar von dem Antriebsrad angetrieben werden oder auch dass ein Coderad von dem Antriebsrad angetrieben wird, während das zweite Coderad von dem ersten Coderad angetrieben wird. Die Unterschiede im Übersetzungsverhältnis der beiden angetriebenen Coderäder ist beim Gegenstand dieses Drehwinkelsensors größer als bei vorbekannten Drehwinkelsensoren. Daher bietet es sich an, dem drehbaren Körper, beispielsweise der Lenkspindel, zwei unterschiedlich große Antriebsräder mit einer entsprechend unterschiedlichen Anzahl an Zähnen zuzuordnen, in die jeweils der Zahnkranz eines Coderades eingreift. Bei einem Lenkwinkelsensor ist der Durchmesser der Lenkspindel typischerweise deutlich größer als der Durchmesser der Coderäder, so dass daher ohne Weiteres Antriebsräder mit einer unterschiedlichen Zahnanzahl angeordnet werden können. In einem Ausführungsbeispiel dieser vorbeschriebenen Ausgestaltung ist vorgesehen, dass die Coderäder jeweils eine gleiche Zahnanzahl und die als drehbarer Körper dienende Lenkspindel zwei mit jeweils einer unterschiedlichen Zahnanzahl aufweisende Antriebsräder trägt, wobei der Unterschied in der Zahnanzahl zwischen fünf und sieben Zähne beträgt. Bei einer Verwendung von zwei Antriebsrädern mit einer unterschiedlichen Zahnanzahl, können die Coderäder selbst ebenfalls eine unterschiedliche Zahnzahl aufweisen.

Nachfolgend ist die Erfindung unter Bezugnahme auf die beigefügten Figuren beschrieben. Es zeigen:

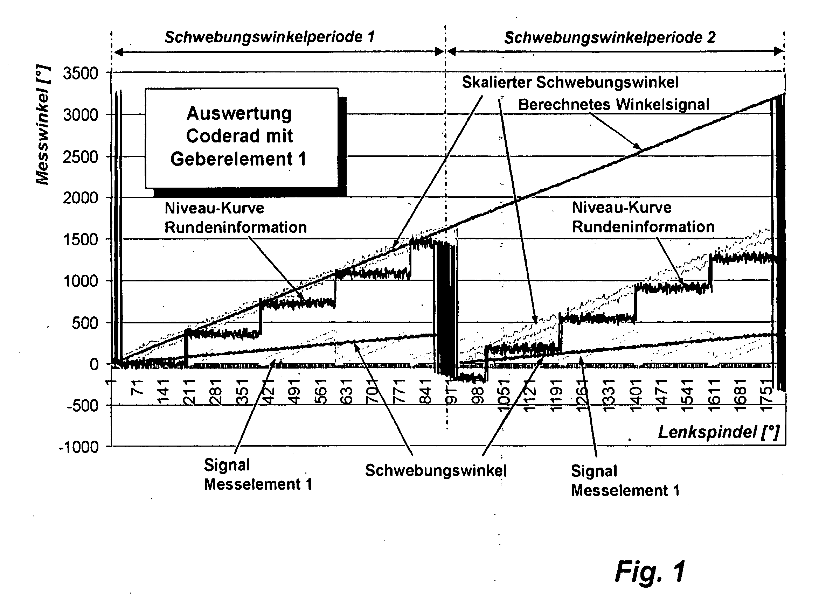

- **Fig. 1:**: ein Diagramm darstellend die aus einem der beiden Coderä- der eines Drehwinkelsensors gewonnene Winkelinformation aufgetragen mit den sich über den Winkelmessbereich der Lenkspindel erstreckenden Schwebungswinkelperioden zu- sammen mit der aus diesen Kurven ermittelten Rundenin- formation bezüglich dieses Coderades,

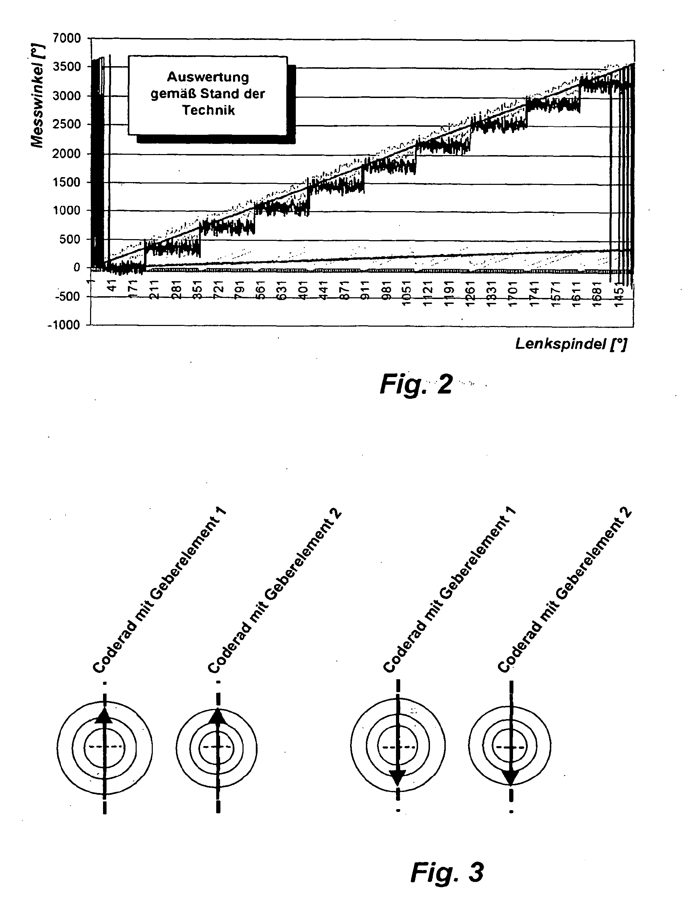

- **Fig. 2:**: ein Diagramm entsprechend demjenigen der Figur 1, aufge- zeichnet mit einem herkömmlichen Drehwinkelsensor und
- **Fig. 3:**: eine schematisierte Darstellung der Stellung zweier, jeweils ein magnetisches Geberelement tragenden Coderäder eines Drehwinkelsensors gemäß der Erfindung zu Beginn der ers- ten Schwebungswinkelperiode (linke Abbildung) und zu Be- ginn der daran anschließenden zweiten Schwebungswinkel- periode (rechte Abbildung).

In den Figuren 1 und 2 sind Auswertediagramme mit mehreren Auswertekurven dargestellt. Um die Vorteile der Erfindung gegenüber dem Stand der Technik besser herausstellen zu können, sind die in den Diagrammen wiedergegebenen Signale störsignalüberlagert. Bei den erfassten Signalen handelt es sich somit um verrauschte Sensorsignale.

In dem Diagramm der Figur 1 ist auf der x-Achse der sich über mehrere Runden einer Lenkspindel eines Kraftfahrzeuges erstreckende Winkelbereich aufgetragen. Dieser beträgt bei dem dargestellten Ausführungsbeispiel fünf Runden (1800°). Der Drehwinkelsensor, mit dem die absolute Lenkwinkelstellung der Lenkspindel ermittelt werden soll, ist dergestalt ausgelegt, dass innerhalb dieses Messbereiches ein ein magnetisches Geberelement tragendes Coderad neun Mal um 360° gedreht wird. Das Ausgangssignal des diesem Geberelement zugeordneten Sensorelementes ergibt die in Figur 1 dargestellte untere sägezahnartig ausgebildete Kurve. Innerhalb jeder Runde ist die Winkelstellung des Coderades eindeutig ermittelbar.

Der Drehwinkelsensor verfügt über ein weiteres Coderad. Das weitere Coderad mit dem weiteren magnetischen Geberelement wird mittelbar oder unmittelbar von der Lenkspindel entsprechend unterschiedlich untersetzt angetrieben dergestalt, damit innerhalb des Winkelmessbereiches zwei Schwebungswinkelperioden entstehen. Bei diesem Ausführungsbeispiel dreht über den Winkelmessbereich das Coderad mit dem weiteren Geberelement elf Mal um 360°. Der Schwebungswinkel wird gebildet durch Subtraktion der von dem Geberelement des einen Coderades generierten Winkelinformationssignale von denjenigen des anderen Coderades. Der Schwebungswinkel weist in den beiden bei dem dargestellten Ausführungsbeispiel vorgesehenen Schwebungswinkelperioden eine konstante Steigung auf. Über den Schwebungswinkel wird die zur Absolutwinkelbestimmung der Lenkspindel benötigte Rundeninformation des Coderades, dessen Messkurve in Figur 1 gezeigt ist, ermittelt. Zu diesem Zweck wird der Schwebungswinkel skaliert. Anschließend wird von dem skalierten Schwebungswinkel die bei einer Abtastung gewonnene Winkelinformation subtrahiert. Dieses resultiert in der in Figur 1 dargestellten treppenstufenartig verlaufenden Kurve, dessen einzelne horizontale Abschnitte mit "Niveau" im Rahmen dieser Ausführungen bezeichnet sind. In jeder Schwebungswinkelperiode sind die Niveaus unterschiedlich, so dass jede Runde des Coderades eindeutig bestimmt werden kann. Die Sprunghöhe benachbarter Niveaus ist, bedingt durch die Steigung des Schwebungswinkels, ausreichend hoch, damit auch fehlerbehaftete Plausibilitätsprüfungsergebnisse das Rundenergebnis nicht so weit in Frage stellen könnten, dass dieses auf einem unmittelbar benachbarten Niveau angesiedelt sein könnte. In dem Diagramm der Figur 1 ist das berechnete Winkelsignal eingetragen, welches als kontinuierlich steigende Kurve sich über den Winkelmessbereich erstreckt. Hieraus ist erkennbar, dass auf jeder Winkelstellung der Geberelemente in Abhängigkeit von seiner Runde eine eindeutige Winkelstellung der als drehbaren Körper dienenden Lenkspindel berechnet werden kann.

Die Skalierung des Schwebungswinkels erfolgt dergestalt, dass nach Subtrahieren der bei der Abtastung gewonnenen Winkelinformation die einzelnen Niveaus der Niveau-Kurve eine horizontale Erstreckung und somit einen konstanten y-Wert über ihre Länge aufweisen.

Bei dem dargestellten Ausführungsbeispiel ist der Absolutwinkel der beiden ein magnetisches Geberelement tragenden Coderäder um den halben Messbereich eines Sensorelementes verschoben, was zu dem Sprung in der Kurve des skalierten Schwebungswinkels und in der Niveau-Kurve führt. Generell ist es zweckmäßig, den Versatz in dem Absolutwinkel der beiden Coderäder nach jeder Periode des Schwebungswinkels so zu konzipieren, dass dieser dem n-ten Teil des Messbereiches des Sensorelementes entspricht, wobei n der Anzahl der Schwebungswinkelperioden innerhalb des vorgesehenen Winkelmessbereiches entspricht. Die unmittelbar an die Sprungstelle angrenzenden Niveaus definieren dieselbe Runde des Coderades. Durch die eindeutige Bestimmung jeder Runde des Coderades ist ebenfalls eine eindeutige Zuordnung der Winkelstellung der Lenkspindel hinsichtlich derjenigen Runde, in der sich die Lenkspindel befindet, möglich.

Zur Unterscheidung des mit einem Drehwinkelsensor gemäß der Erfindung aufgezeichneten Auswertediagramms (Figur 1) mit einem entsprechenden Auswertediagramm, aufgezeichnet mit einem herkömmlichen Drehwinkelsensor, ist ein solches. Diagramm in Figur 2 gezeigt. Deutlich erkennbar in dem Auswertediagramm des vorbekannten Drehwinkelsensors ist die deutlich geringere Sprunghöhe zwischen benachbarten Niveaus, die nur halb so groß ist wie die des in Figur 1 dargestellten Ausführungsbeispiels der Erfindung. Der Störabstand ist deutlich geringer als beim Gegenstand der Erfindung.

Figur 3 zeigt die Absolutwinkelstellung der jeweils ein magnetisches Geberelement, beispielsweise einen Magneten tragenden Coderäder eines als Lenkwinkelsensor ausgebildeten Drehwinkelsensors gemäß der Erfindung, und zwar im linken Abschnitt der Figur 3 in der Ausgangsstellung der in Figur 1 gezeigten linken Schwebungswinkelperiode und in der im rechten Teil der Abbildung 3 in ihrer Stellung nach Durchlaufen der ersten Schwebungswinkelperiode und somit unmittelbar hinter der in Figur 1 gezeigten Sprungstelle zu Beginn der zweiten Schwebungswinkelperiode. Der als Offset zu bezeichnende Versatz der Absolutwinkel der beiden Coderäder in den beiden Schwebungswinkelperioden beträgt 180°, mithin den halben Messbereich eines Sensorelementes.

Die Erfindung ist anhand eines Ausführungsbeispieles mit zwei Messelementen beschrieben worden. Zur Erhöhung der Betriebssicherheit oder Verfügbarkeit des Systems durch Redundanz kann der Drehwinkelsensor auch mehr als zwei Messelemente aufweisen.

## Patentansprüche

1. Drehwinkelsensor zum Bestimmen der absoluten Winkelstellung eines über mehrere Runden drehbaren Körpers, etwa einer Lenkspindel eines Kraftfahrzeuges, mit zwei magnetisch arbeitend ausgelegten Messelementen, jeweils umfassend ein magnetisches, gegenüber einem Sensorelement rotatorisch bewegtes und von dem Körper angetriebenes Geberelement, wobei die beiden Geberelemente zum Bestimmen des sich aus der Differenz der Winkelinformation der Geberelemente ergebenden Schwebungswinkels mit einem unterschiedlichen Übersetzungsverhältnis angetrieben sind, welches so ausgelegt ist, dass innerhalb des sich über mehrere Runden erstreckenden Winkelmessbereiches des drehbaren Körpers mehr als eine Schwebungswinkelperiode enthalten ist, und die Absolutwinkelstellung der Geberelemente in den Schwebungswinkelperioden unterschiedlich ist, **dadurch gekennzeichnet, dass** die Absolutwinkelstellung der Geberelemente in aufeinander folgenden Schwebungswinkelperioden um den n-ten Teil des Messbereiches eines Sensorelementes versetzt ist, wobei n die Anzahl der Schwebungswinkelperioden innerhalb des Winkelmessbereiches ist.

2. Drehwinkelsensor nach Anspruch 1, **dadurch gekennzeichnet, dass** innerhalb des Winkelmessbereiches zwei oder mehr Schwebungswinkelperioden enthalten sind.

3. Drehwinkelsensor nach einem der Ansprüche 1 oder 2, **dadurch gekennzeichnet, dass** die Geberelemente jeweils Teil eines Coderades mit einem äußeren Zahnkranz sind, die wiederum in Wirkverbindung mit einem Antriebsrad des drehbaren Körpers stehen.

4. Drehwinkelsensor nach Anspruch 3, **dadurch gekennzeichnet, dass** die Coderäder eine unterschiedliche Zahnanzahl aufweisen.

5. Drehwinkelsensor nach Anspruch 3 oder 4, **dadurch gekennzeichnet, dass** der drehbare Körper ein Antriebsrad mit einem äußeren Zahnkranz trägt, in den die Zahnkränze der Coderäder eingreifen.

6. Drehwinkelsensor nach Anspruch 3 oder 4, **dadurch gekennzeichnet, dass** der drehbare Körper zwei Antriebsräder mit jeweils einem äußeren Zahnkranz, jedoch mit unterschiedlicher Zahnanzahl trägt, wobei jeweils ein Coderad in die Verzahnung eines Antriebsrades eingreift.

7. Verfahren zum Bestimmen der absoluten Winkelstellung eines über mehrere Runden drehbaren Körpers, etwa einer Lenkspindel eines Kraftfahrzeuges mit zwei magnetisch arbeitend ausgelegten Messelementen, jeweils umfassend ein magnetisches, gegenüber einem Messsensor rotatorisch bewegtes und von dem Körper angetriebenes Geberelement, wobei die beiden Geberelemente mit einem unterschiedlichen Übersetzungsverhältnis angetrieben sind, welches Verfahren eine Bestimmung des Schwebungswinkels als Differenz der Winkelinformation der Ausgangssignale der Messelemente umfasst, wobei der sich über mehrere Runden erstreckende Winkelmessbereich in mehr als einen jeweils eine Schwebungswinkelperiode enthaltenden Schwebungswinkelperiodenabschnitt unterteilt wird, **dadurch gekennzeichnet, dass** die Absolutwinkelstellung der Geberelemente in aufeinander-folgenden Schwebungswinkelperioden um den n-ten Teil des Messbereiches eines Sensorelementes versetzt ist, wobei n die Anzahl der Schwebungswinkelperioden innerhalb des Winkelmessbereiches ist.

## Claims

1. Angle-of-rotation sensor for determining the absolute angular position of a body that can be rotated several rounds, for instance the steering shaft of a motor vehicle, with two measuring elements designed to function magnetically, each comprising a magnetic sensor driven by the body and being rotated in the opposing direction to a sensor element, wherein, for the purpose of determining the beat angle resulting from the difference in the angular information from the sensor elements, the two sensor elements are driven at a different transmission ratio which is conceived in such a way that more than one beat angle period is incorporated in the angle measurement range of the rotating body extending over several rounds, and the absolute angular position of the sensor elements in the beat angle periods is different, **characterised in that** the absolute angular position of the sensor elements is offset in consecutive beat angle periods by the nth part of the measurement range of a sensor element, with n being the number of beat angle periods within the angle measurement range.

2. Angle-of-rotation sensor according to Claim 1, **characterised in that** two or more beat angle periods are incorporated in the angle measurement range.

3. Angle-of-rotation sensor according to Claim 1 or Claim 2, **characterised in that** the sensor elements are each part of an encoder wheel with an outer toothed rim which, in turn, interact with a drive wheel on the rotating body.

4. Angle-of-rotation sensor according to Claim 3, **characterised in that** the encoder wheels feature a different number of teeth.

5. Angle-of-rotation sensor according to Claim 3 or Claim 4, **characterised in that** the rotating body supports a drive wheel with an outer toothed rim into which the toothed rims on the encoder wheels engage.

6. Angle-of-rotation sensor according to Claim 3 or Claim 4, **characterised in that** the rotating body supports two drive wheels, each with an outer toothed rim though with a different number of teeth, with each of the encoder wheels engaging in the teeth of a drive wheel.

7. Process for determining the absolute angular position of a body that can be rotated several rounds, for instance the steering shaft of a motor vehicle, with two measuring elements designed to function magnetically, each comprising a magnetic sensor driven by the body and being rotatorily moved in the opposing direction to a measuring sensor, with the two sensor elements being driven at a different transmission ratio, the said process encompassing a determination of the beat angle as the difference in the angle information of the output signals of the measuring elements, with the angle measurement range that extends over several rounds being subdivided into more than one beat angle period sections, each of which incorporates a beat angle period, **characterised in that** the absolute angular position of the sensor elements is offset in consecutive beat angle periods by the nth part of the measurement range of a sensor element, with n being the number of beat angle periods within the angle measurement range.

## Revendications

1. Capteur d'angle de rotation pour la détermination de la position angulaire absolue d'un corps rotatif pouvant exécuter plusieurs tours, comme, par exemple, l'arbre de direction d'un véhicule automobile, avec deux éléments de mesure, fonctionnant magnétiquement, qui comprennent, chacun, un élément codeur magnétique, mû en rotation par rapport à un élément capteur et entraîné par ledit corps, les deux éléments codeurs étant, pour la détermination de l'angle de battement, qui résulte de la différence de l'information angulaire des éléments codeurs, entraînés avec un rapport de transmission différent, qui est calculé de sorte que plus d'une période de l'angle de battement soit contenue dans la plage de mesure d'angle du corps rotatif couvrant plusieurs tours, et que la position angulaire absolue des éléments codeurs soit différente dans les périodes de l'angle de battement, **caractérisé en ce que** la position angulaire absolue des éléments codeurs, dans des périodes d'angle de battement successives, est décalée de 1/n^{éme} de la plage de mesure d'un élément capteur, *n* étant le nombre des périodes de l'angle de battement comprises dans une plage de mesure d'angle.

2. Capteur d'angle de rotation selon la revendication 1, **caractérisé en ce que** deux ou plusieurs périodes de l'angle de battement sont comprises dans la plage de mesure d'angle.

3. Capteur d'angle de rotation selon l'une des revendications 1 et 2, **caractérisé en ce que** les éléments codeurs font chacun partie d'une roue code avec une jante dentée extérieure, qui est en relation avec une roue motrice du corps rotatif.

4. Capteur d'angle de rotation selon la revendication 3, **caractérisé en ce que** les roues code présentent un nombre de dents différent.

5. Capteur d'angle de rotation selon revendication 3 ou 4, **caractérisé en ce que** le corps rotatif porte une roue motrice avec une jante dentée extérieure, dans laquelle s'engagent les jantes dentées des roues code.

6. Capteur d'angle de rotation selon revendication 3 ou 4, **caractérisé en ce que** le corps rotatif porte deux roues motrices, qui présentant chacune une jante dentée extérieure, mais présentent des nombres de dents différents, chaque roue code s'engrenant dans la denture d'une roue motrice.

7. Procédé pour la détermination de la position angulaire absolue d'un corps rotatif, pouvant exécuter plusieurs tours, comme, par exemple, l'arbre de direction d'un véhicule automobile, avec deux éléments de mesure, fonctionnant magnétiquement, qui comprennent, chacun, un élément codeur magnétique, mû en rotation par rapport à un capteur de mesure et entraîné par ledit corps, les deux éléments codeurs étant entraînés avec un rapport de transmission différent, ledit procédé comprenant une détermination de l"angle de battement, en tant que différence de l'information angulaire des signaux de sortie des éléments de mesure, la plage de mesure, qui, s'étend sur plusieurs tours, étant divisée en plus d'une section de période de l'angle de battement, lesdites sections de périodes de l'angle de battement comprenant chacune une période d'angle de battement, **caractérisé en ce que** la position angulaire absolue des 'éléments codeurs, dans des périodes de l'angle de battement se succédant, est décalée de *1*/*n*^{ème} de la plage de mesure d'un élément capteur, *n* étant le nombre des périodes de l'angle de battement au sein d'une plage de mesure d'angle.
